# FASCICULE DE BREVET EUROPEEN

(11) **EP 2 107 260 B1**
(45) Date de publication et mention de la délivrance du brevet: **04.05.2011**
(21) Numéro de dépôt: 09290194.1
(22) Date de dépôt: 17.03.2009
(51) Int. Cl.: F16C 19/18, F16C 19/52, F16C 33/58, G01L 5/00

(54) **Palier à roulement comprenant au moins une zone instrumentée délimitée axialement et délivrant un signal représentatif des déformations de cette zone**
Wälzlager mit axial begrenztem, deformierbarem und zur Abgabe eines Deformationssignals ausgerüstem Bereich
Rolling bearing with at least one axially limited and deformation sensitive area delivering a deformation signal

(30) Priorité: 03.04.2008 FR 0801855
(43) Date de publication de la demande: 07.10.2009
(73) Titulaire: SNR Roulements, 74000 Annecy (FR)
(72) Inventeur: Duret, Christophe, 74600 Quintal (FR); Guillaume, Sébastien, 74290 Menthon-Saint-Bernard (FR)
(74) Mandataire: Sayettat, Julien Christian

(56) Documents cités:
- EP-A- 0 018 936
- EP-A- 1 176 409
- EP-A- 1 506 883
- EP-A- 1 843 055
- WO-A-2005/040745
- WO-A-2005/043105
- WO-A-2005/121733
- FR-A- 2 125 926
- US-A- 4 203 319

## Description

L'invention concerne un palier à roulement comprenant un organe fixe et un organe tournant comprenant chacun au moins une piste de roulement entre lesquelles au moins une rangée de corps roulants est disposée pour permettre la rotation relative desdits organes autour d'un axe.

En particulier, l'invention s'applique à des roulements de roue de véhicule automobile, la bague fixe dudit roulement étant destinée à être solidaire du châssis du véhicule, la roue étant destinée à être montée en rotation par l'intermédiaire de la bague tournante dudit roulement, et deux rangées de billes étant prévues entre lesdites bagues.

Dans de nombreuses applications, notamment en relation avec les systèmes d'assistance et de sécurité tels que l'ABS ou l'ESP, il est nécessaire de déterminer les efforts qui s'appliquent lors des déplacements du véhicule à l'interface entre la roue et la chaussée sur laquelle ladite roue tourne.

En particulier, la détermination de ces efforts peut être réalisée par une mesure des déformations de la bague fixe qui sont induites par le passage des corps roulants. En effet, l'amplitude de ces déformations est représentative des efforts transmis par le roulement. Pour ce faire, notamment le document EP-1 176 409 prévoit d'instrumenter des zones de la bague fixe en associant sur elles au moins une jauge de mesure desdites déformations, ladite jauge comprenant au moins un motif d'un matériau sensible qui est apte à se déformer en délivrant un signal représentatif desdites déformations.

Toutefois, la mesure des déformations ainsi réalisée demeure difficilement exploitable, notamment du fait de leur faible variation d'amplitude. En outre, la sensibilité de la mesure est également limitée par les déformations globales de l'organe fixe qui sont induites par d'autres facteurs que le passage des corps roulants. En particulier, la température induit des déformations globales de l'organe fixe, autour desquelles les déformations induites par le passage des corps roulants varient faiblement.

Le document US 4 203 319 montre sur la figure 10 un roulement à billes à contact oblique avec des jauges de mesure de déformation placées sur la surface extérieure de la bague extérieure du roulement et dans le prolongement de la ligne de charge passant par le centre des billes.

L'invention vise à perfectionner l'art antérieur en proposant notamment un palier à roulement dont l'organe fixe présente des zones instrumentées sur lesquelles les motifs de matériau sensible sont disposés pour optimiser leur sensibilité relativement aux variations d'amplitude des déformations induites par le passage des corps roulants.

A cet effet, l'invention propose un palier à roulement selon la revendication 1

D'autres objets et avantages de l'invention apparaîtront dans la description qui suit, faite en référence aux figures annexées, dans lesquelles :
- la figure 1 est une vue partielle en perspective montrant la disposition d'un corps roulant dans une piste de roulement d'un organe fixe ;
- la figure 2 est une vue partielle en perspective de l'organe fixe selon la figure 1, montrant les surfaces de délimitation axiale d'une zone instrumentée ;
- les figures 3 sont des représentations de l'organe extérieur fixe d'un palier à roulement selon un premier mode de réalisation de l'invention, respectivement en perspective (figure 3a) et en coupe longitudinale (figure 3b) ;
- les figures 4 sont des représentations de l'organe extérieur fixe d'un palier à roulement selon un deuxième mode de réalisation de l'invention, respectivement en perspective (figure 4a) et en coupe longitudinale (figure 4b).

En relation avec ces figures, on décrit ci-dessous un palier à roulement de roue de véhicule automobile comprenant un organe extérieur fixe 1 destiné à être associé au châssis du véhicule, et un organe intérieur tournant (non représenté) sur lequel est destinée à être montée la roue.

Chacun des organes comprend deux jeux de pistes de roulement 2 qui sont espacés axialement et entre lesquels deux rangées de billes 3 sont respectivement disposées pour permettre la rotation relative desdits organes autour d'un axe. Toutefois, l'invention peut concerner d'autres types de palier à roulement, ainsi que des paliers pour d'autres applications automobiles ou autres.

Lors du déplacement du véhicule, la roue tourne sur la chaussée en induisant des efforts à leur interface, lesdits efforts étant transmis au châssis par l'intermédiaire du palier. Par conséquent, la détermination de ces efforts, notamment en vue d'alimenter les systèmes d'assistance et de sécurité du véhicule, peut être réalisée en estimant temporellement les composantes du torseur d'efforts qui s'applique sur le palier.

En particulier, lors de la rotation de l'organe tournant dans l'organe fixe 1, le passage des billes 3 induit des déformations élastiques de la périphérie extérieure circonférentielle de l'organe fixe 1, dont la mesure peut être exploitée afin de calculer l'estimation des composantes du torseur d'efforts. En effet, le passage des corps roulants 3 induit un effort sur la périphérie, qui la déforme élastiquement de façon périodique autour d'une valeur moyenne.

La périphérie extérieure de l'organe fixe 1 est pourvue d'au moins une surface libre 4 qui est déformable élastiquement par les efforts induits par le passage des corps roulants 3 lors de la rotation de l'organe tournant. Dans les modes de réalisation représentés, quatre surfaces déformables 4 sont équiréparties sur la périphérie extérieure de l'organe fixe 1, lesdites surfaces formant un méplat dont la normale s'étend radialement. Ces méplats sont disposés au dessus de chacune des rangées de corps roulants 3 de sorte à être déformés élastiquement par chacune d'entre elles.

La surface déformable 4 présente au moins une zone instrumentée 5 sur laquelle est associé au moins un motif (non représenté) d'un matériau apte à se déformer en délivrant un signal représentatif desdites déformations. Selon une réalisation, le palier comprend une jauge de mesure des déformations, ladite jauge comprenant un ou des motifs à base d'éléments résistifs, notamment piézorésistifs ou magnétostrictifs, qui sont disposés directement sur la surface déformable 4 ou sur un substrat de support qui est associé par exemple par collage sur la surface déformable 4.

En particulier, une jauge comprenant une barrette de motifs espacés sur un substrat peut être utilisée pour délivrer un signal temporel pseudo sinusoïdal autour d'une valeur moyenne, ledit signal étant fonction des déformations de la surface déformable 4. Ainsi, le signal peut être conditionné pour exploiter la composante pseudo sinusoïdale qui est représentative de l'amplitude des déformations induites par le passage des corps roulants 3. Toutefois, l'invention n'est pas limitée à une réalisation particulière de jauges de mesure des déformations.

Pour optimiser la sensibilité du motif de matériau sensible relativement aux déformations qui sont induites par le passage des corps roulants 3, on décrit ci-dessous une délimitation axiale de la zone instrumentée 5 sur laquelle ledit motif est associé. En particulier, l'association du substrat de la jauge sur la surface déformable 4 peut alors être réalisée de sorte à disposer le motif de matériau sensible sur la zone instrumentée 5.

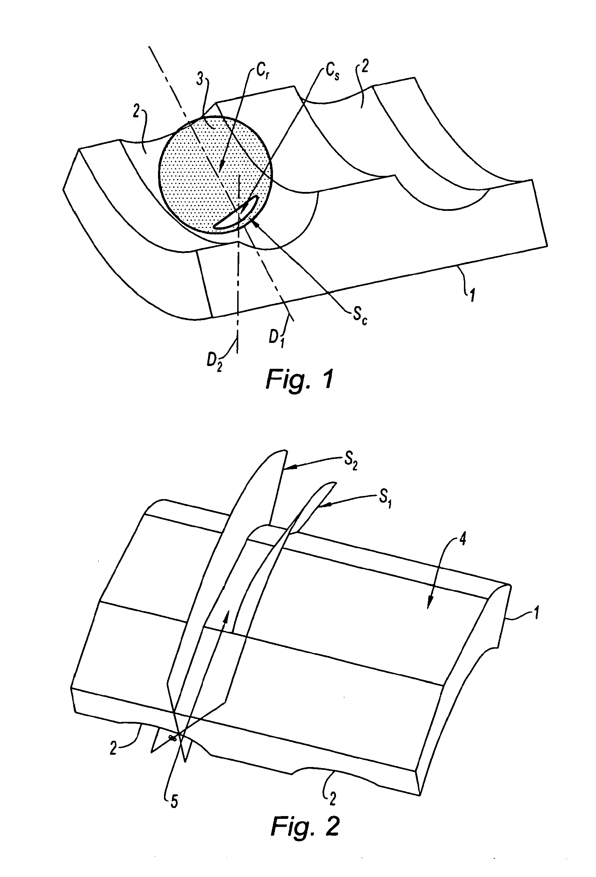

La délimitation axiale d'une zone instrumentée 5 est réalisée par rapport aux corps roulants 3 de la rangée qui induit les déformations à mesurer. En outre, au moins deux types de zones instrumentées 5 peuvent être délimités axialement par rapport aux corps roulants 3 de respectivement une rangée, les motifs de matériau sensibles étant disposés sur chaque type de zones instrumentées 5 pour qu'ils délivrent un signal représentatif des déformations induites par le passage des corps roulants 3 d'une rangée. En effet, compte tenu de la faible amplitude des déformations, le motif n'est sensible qu'aux déformations induites par les corps roulants 3 de la rangée par rapport à laquelle la zone instrumentée 5 correspondante a été délimitée. La figure 2 représente la délimitation d'un type de zone instrumentée 5, l'autre type pouvant être construit de façon analogue avec un corps roulant 3 disposé dans l'autre rangée.

En particulier, les motifs de matériau sensible de chaque type de zones instrumentées 5 peuvent être disposés sur un même substrat, notamment lorsque les zones instrumentées 5 sont délimitées sur une même surface déformable 4 qui s'étend axialement d'une piste de roulement 2 à l'autre.

Comme représenté sur la figure 1, les corps roulants 3 sont en appui oblique sur la piste 2 de l'organe fixe 1 par l'intermédiaire d'une surface de contact S_{c} qui présente une géométrie quasi-elliptique dans le cas d'un corps roulant 3 sphérique. La surface de contact S_{c} est définie relativement à un appui oblique du corps roulant 3 dans un état de charge déterminé du palier.

Selon une réalisation, l'état de charge déterminé correspond à l'état de pré charge du palier. Selon une autre réalisation, l'état de charge déterminé correspond à celui dans lequel le palier est le plus souvent sollicité et/ou dans lequel on cherche à mesurer les déformations de façon préférentielle ou avec le maximum de précision.

Comme représenté sur la figure 2, la zone instrumentée 5 est délimitée axialement entre:
- la surface S₁ définie par révolution autour de l'axe du palier de la droite D₁ passant par le centre Cᵣ d'un corps roulant 3 déformant la surface 4 et par le centre Cₛ de la surface de contact S_{c} dudit corps roulant ; et
- la surface S₂ définie par révolution autour de l'axe du palier de la normale D₂ à la surface déformable 4 qui passe par ledit centre Cₛ de la surface de contact S_{c}.

En outre, toujours pour améliorer la sensibilité du motif de matériau sensible, celui-ci peut être disposé précisément sur la zone instrumentée 5. Selon une première réalisation, le motif de matériau sensible peut être est disposé sur la zone instrumentée 5 au minimum de l'épaisseur de l'organe fixe 1, ladite épaisseur étant mesurée suivant la normale D₂ à ladite zone instrumentée. Ainsi, le motif de matériau sensible est disposé au plus près des corps roulants 3 de sorte à mesurer des déformations d'amplitude maximale.

Selon une deuxième réalisation, le motif de matériau sensible peut être disposé sur la zone instrumentée 5 au maximum de la rigidité de ladite zone instrumentée. Ainsi, le motif de matériau sensible est disposé de sorte à limiter l'influence des variations de déformation moyenne dans les mesures. En particulier, on augmente ainsi le rapport entre les variations d'amplitude des déformations induites par le passage des corps roulants 3 et l'amplitude moyenne des déformations de l'organe fixe 1. En effet, les déformations moyennes, notamment d'ovalisation et de gonflement de la périphérie extérieure de l'organe fixe 1, sont alors limitées au niveau du motif de matériau sensible.

Selon une troisième réalisation visant à obtenir un compromis entre les avantages des deux modes de réalisation précédents, le motif de matériau sensible peut être disposé sur la zone instrumentée 5 au minimum du rapport entre l'épaisseur de l'organe fixe 1 et la rigidité de ladite zone instrumentée.

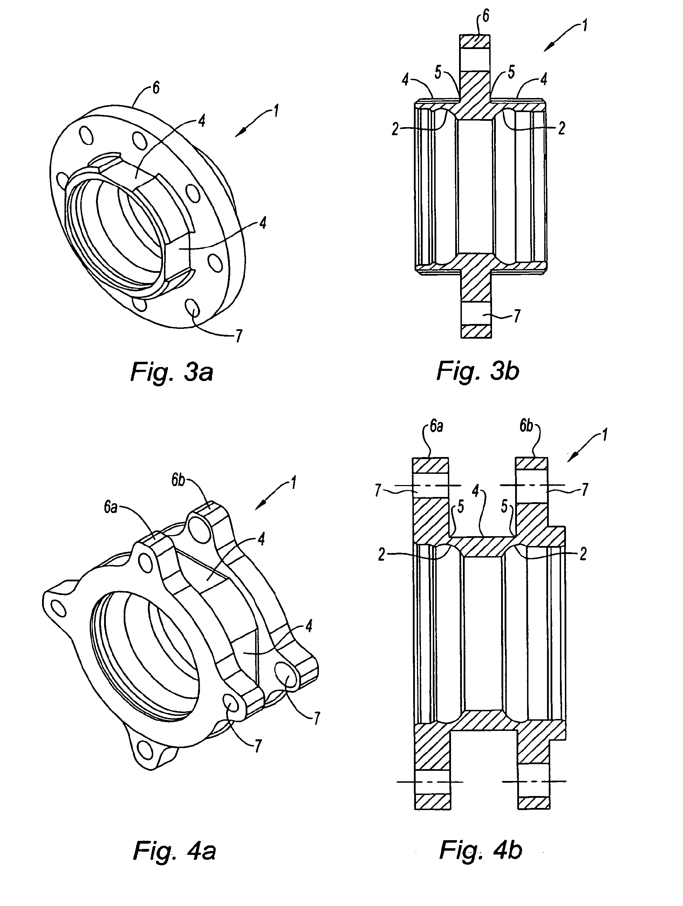

En relation avec les figures 3 et 4, on décrit ci-dessous deux modes de réalisation de l'organe extérieur fixe 1 d'un palier à roulement dans lesquels la périphérie extérieure dudit organe présente au moins une bride 6 comprenant quatre orifices 7 formant moyens de fixation par boulonnage du palier à une structure fixe.

En particulier, la bride 6 s'étend essentiellement radialement en étant adjacente axialement à au moins une zone instrumentée 5 de sorte à assurer une rigidification de ladite zone.

Sur les figures 3, une bride 6 est formée entre les rangées de corps roulants 3 et une surface déformable 4 est formée en prolongement axial de part et d'autre de ladite bride. Dans cette réalisation, les motifs de matériau sensible de chaque type de zones instrumentées 5 peuvent être disposés axialement à proximité de respectivement une face latérale de la bride 6.

Sur les figures 4, une bride 6a, 6b est formée au voisinage de chaque bord de la périphérie extérieure et une surface déformable 4 s'étend axialement entre lesdites brides. Ainsi, les types de zones instrumentées peuvent être rigidifiés par respectivement une bride 6a, 6b et les motifs de matériau sensible de chaque type de zones instrumentées 5 peuvent être disposés axialement à proximité d'une face latérale d'une bride 6a, 6b.

En outre, pour augmenter la rigidité différentielle entre la zone instrumentée 5 et le reste de la périphérie de l'organe fixe 1, la partie de la bride 6 formée en regard de la zone non instrumentée présente une hauteur globale qui est inférieure à celle de la partie de ladite bride formée en regard de la zone instrumentée 5.

Dans les réalisations représentées, le motif de matériau sensible peut être disposé contre la face latérale de la bride 6, 6a, 6b, aussi proche de celle-ci que les conditions de fabrication et d'implantation dudit motif sur la surface déformable 4 le permettent. Ainsi, le motif de matériau sensible est disposé sur une zone instrumentée 5 rigidifiée, de sorte à limiter l'influence des variations de déformation moyenne dans les mesures.

En outre, chaque face latérale d'une bride 6, 6a, 6b s'étend sensiblement dans le prolongement radial d'une piste de roulement 2 de sorte à obtenir conjointement une disposition des motifs de matériau sensible à proximité de ladite bride et au plus près des corps roulants 3.

## Revendications

1. Palier à roulement comprenant un organe fixe (1) et un organe tournant comprenant chacun au moins une piste de roulement (2) entre lesquelles au moins une rangée de corps roulants (3) est disposée pour permettre la rotation relative desdits organes autour d'un axe, les corps roulants (3) étant en appui sur la pige (2) de l'organe fixe (1) par l'intermédiaire d'une surface de contact (S_{c}) qui est définie relativement à un appui du corps roulant (3) dans un état de charge déterminé dudit palier, l'organe fixe (1) comprenant une surface libre (4) qui est déformable élastiquement par les efforts induits par le passage des corps roulants (3) lors de la rotation de l'organe tournant, ladite surface présentant au moins une zone instrumentée (5) sur laquelle est associé au moins un motif d'un matériau sensible qui est apte à se déformer en délivrant un signal représentatif desdites déformations, ledit palier étant **caractérisé en ce que** la zone instrumentée (5) est délimitée axialement entre :
- la surface (S₁) définie par révolution autour de l'axe du palier de la droite (D₁) passant par le centre (Cᵣ) d'un corps roulant (3) déformant la surface (4) et par le centre (Cₛ) de la surface de contact (S_{c}) dudit corps roulant ; et
- la surface (S₂) définie par révolution autour de l'axe du palier de la droite (D₂) normale à la surface libre déformable (4) qui passe par ledit centre (Cₛ) de la surface de contact (S_{c}).

2. Palier à roulement selon la revendication 1, **caractérisé en ce que** le motif de matériau sensible est disposé sur la zone instrumentée (5) au minimum de l'épaisseur de l'organe fixe (1), ladite épaisseur étant mesurée suivant la droite (D₂) normale à ladite zone instrumentée.

3. Palier à roulement selon la revendication 1, **caractérisé en ce que** le motif de matériau sensible est disposé sur la zone instrumentée (5) au maximum de la rigidité de ladite zone instrumentée.

4. Palier à roulement selon la revendication 1, **caractérisé en ce que** le motif de matériau sensible est disposé sur la zone instrumentée (5) au minimum du rapport entre l'épaisseur de l'organe fixe (1) et la rigidité de ladite zone instrumentée.

5. Palier à roulement selon l'une quelconque des revendications 1 à 4, **caractérisé en ce que** la surface déformable (4) forme un méplat dont la normale s'étend radialement. !

6. Palier à roulement selon l'une quelconque des revendications 1 à 5, **caractérisé en ce qu'**il comprend deux rangées de corps roulants (3) qui sont disposées respectivement entre deux jeux de pistes de roulement (2) espacés axialement, au moins deux types de zones instrumentées (5) étant délimités axialement par rapport aux corps roulants (3) de respectivement une rangée, les motifs de matériau sensibles étant disposés sur chaque type de zones instrumentées (5) pour qu'ils délivrent un signal représentatif des déformations induites par le passage des corps roulants (3) d'une rangée.

7. Palier à roulement selon la revendication 6, **caractérisé en ce que** les zones instrumentées (5) sont délimitées sur une même surface déformable (4) qui s'étend axialement.

8. Palier à roulement selon l'une quelconque des revendications 1 à 7, **caractérisé en ce que** l'organe fixe (1) comprend au moins une bride (6) qui s'étend radialement sur sa périphérie extérieure, ladite bride étant adjacente axialement à au moins une zone instrumentée (5) de sorte à assurer une rigidification de ladite zone.

9. Palier à roulement selon les revendications 6 et 8, **caractérisé en ce qu'**une bride (6) est formée entre les rangées de corps roulants (3), les motifs de matériau sensible de chaque type de zones instrumentées (5) étant disposés axialement à proximité de respectivement une face latérale de la bride (6).

10. Palier à roulement selon les revendications 6 et 8, **caractérisé en ce que** les types de zones instrumentées (5) sont rigidifiés par respectivement une bride (6a, 6b), les motifs de matériau sensible de chaque type de zones instrumentées (5) étant disposés axialement à proximité d'une face latérale d'une bride (6a, 6b).

## Claims

1. Roller bearing comprising a fixed member (1) and a rotating member each comprising at least one rolling track (2) between which at least one row of rolling bodies (3) is arranged in order to allow for the relative rotation of said members around an axis, the rolling bodies (3) being thrust against the track (2) of the fixed member (1) by the intermediary of a contact surface (S_{c}) which is defined relatively to a thrust of the rolling body (3) in a determined load state of said bearing, the fixed member (1) comprising a free surface (4) which is elastically deformable by the efforts induced by the passage of the rolling bodies (3) during the rotation of the rotating member, said surface having at least one deformation sensitive area (5) whereon is associated at least one pattern of a sensitive material which is able to be deformed by delivering a signal representing said deformations, said bearing being **characterised in that** the deformation sensitive area (5) is axially delimited between:
- the surface (S₁) defined by revolution around the axis of the bearing of the straight line (D₁) passing through the centre (Cᵣ) of a rolling body (3) deforming the surface (4) and through the centre (Cₛ) of the contact surface (S_{c}) of said rolling body; and
- the surface (S₂) defined by revolution around the axis of the bearing of the straight line (D₂) normal to the deformable free surface (4) which passes through said centre (Cₛ) of the contact surface (S_{c}).

2. Roller bearing according to claim 1, **characterised in that** the pattern of sensitive material is arranged on the deformation sensitive area (5) at the minimum of the thickness of the fixed member (1), said thickness being measured according to the straight line (D₂) normal to said deformation sensitive area.

3. Roller bearing according to claim 1, **characterised in that** the pattern of sensitive material is arranged on the deformation sensitive area (5) at the maximum of the rigidity of said deformation sensitive area.

4. Roller bearing according to claim 1, **characterised in that** the pattern of sensitive material is arranged on the deformation sensitive area (5) at the minimum of the relationship between the thickness of the fixed member (1) and the rigidity of said deformation sensitive area.

5. Roller bearing according to any of claims 1 to 4, **characterised in that** the deformable surface (4) forms a flat of which the normal extends radially.

6. Roller bearing according to any of claims 1 to 5, **characterised in that** it comprises two rows of rolling bodies (3) which are arranged respectively between two sets of rolling tracks (2) spaced axially, at least two types of deformation sensitive areas (5) being axially delimited in relation to the rolling bodies (3) by respectively one row, the patterns of sensitive material being arranged on each type of deformation sensitive areas (5) so that they deliver a signal representative of the deformations induced by the passage of the rolling bodies (3) of one row.

7. Roller bearing according to claim 6, **characterised in that** the deformation sensitive areas (5) are delimited over the same deformable surface (4) which extends axially.

8. Roller bearing according to any of claims 1 to 7, **characterised in that** the fixed member (1) comprises at least one flange (6) which extends radially over its exterior periphery, said flange being adjacent axially to at least one deformation sensitive area (5) in such a way as to provide a rigidification of said area.

9. Roller bearing according to claims 6 and 8, **characterised in that** a flange (6) is formed between the rows of rolling bodies (3), the patterns of sensitive material of each type of deformation sensitive areas (5) being arranged axially in the vicinity of respectively a lateral face of the flange (6).

10. Roller bearing according to claims 6 and 8, **characterised in that** the types of deformation sensitive areas (5) are rigidified by respectively a flange (6a, 6b), the patterns of sensitive material of each type of deformation sensitive areas (5) being arranged axially in the vicinity of a lateral face of a flange (6a, 6b).

## Patentansprüche

1. Wälzlager, umfassend ein festes Organ (1) und ein drehendes Organ, umfassend jeweils mindestens eine Rollbahn (2) zwischen denen mindestens eine Reihe rollender Körper (3) angeordnet ist, um die relative Drehung der Organe um eine Achse zu ermöglichen, wobei die rollenden Körper (3) auf der Bahn (2) des festen Organs (1) über eine Kontaktfläche (S_{c}) aufliegen, die bezüglich einer Auflage des rollenden Körpers (3) in einem bestimmten Ladezustand des Lagers definiert ist, wobei das feste Organ (1) eine freie Fläche (4) umfasst, die durch die Kräfte, die durch den Durchgang der rollenden Körper (3) bei der Drehung des drehenden Organs induziert werden, elastisch verformbar ist, wobei die Fläche mindestens einen ausgerüsteten Bereich (5) aufweist, auf dem mindestes ein Muster eines sensiblen Materials assoziiert ist, das dazu in der Lage ist, sich zu verformen und ein Signal auszusenden, das für die Verformungen repräsentativ ist, wobei das Lager **dadurch gekennzeichnet ist, dass** der ausgerüstete Bereich (5) axial begrenzt ist zwischen:
- der Fläche (S₁), definiert durch Drehung um die Achse des rechten Lagers (D₁), die durch das Zentrum (Cᵣ) eines rollenden Körpers (3), der die Fläche (4) verformt, und durch das Zentrum (Cₛ) der Kontaktfläche (S_{c}) des rollenden Körpers verläuft; und
- die Fläche (S₂), definiert durch Drehung um die Achse des rechten Lagers (D₂), Normale zur verformbaren freien Fläche (4), die durch das Zentrum (Cₛ) der Kontaktfläche verlauft (S_{c}).

2. Wälzlager nach Anspruch 1, **dadurch gekennzeichnet, dass** das Muster aus sensiblem Material auf dem ausgerüsteten Bereich (5) auf der minimalen Dicke des festen Organs (1) angebracht ist, wobei die Dicke gemäß der rechten (D2) Normalen zu dem ausgerüsteten Bereich gemessen wird.

3. Wälzlager nach Anspruch 1, **dadurch gekennzeichnet, dass** das Muster aus sensiblem Material auf dem ausgerüsteten Bereich (5) auf der maximalen Steifheit des ausgerüsteten Bereichs angeordnet ist.

4. Wälzlager nach Anspruch 1, **dadurch gekennzeichnet, dass** das Muster aus sensiblem Material auf dem ausgerüsteten Bereich (5) auf dem Minimum des Bezugs zwischen der Dicke des festen Organs (1) und der Steifheit des ausgerüsteten Bereichs angebracht ist.

5. Wälzlager nach einem der Ansprüche 1 bis 4, **dadurch gekennzeichnet, dass** die verformbare Fläche (4) eine Flachstelle bildet, deren Normale sich radial erstreckt.

6. Wälzlager nach einem der Ansprüche 1 bis 5, **dadurch gekennzeichnet, dass** es zwei Reihen rollender Körper (3) umfasst, die jeweils zwischen zwei Rollbahnen (2) angeordnet sind, die axial beabstandet sind, wobei mindestens zwei Arten von ausgerüsteten Bereichen (5) axial bezüglich der rollenden Körper (3) von jeweils einer Reihe begrenzt sind, wobei die Muster aus sensiblem Material auf jeder Art ausgerüstetem Bereich (5) angeordnet sind, damit sie ein Signal aussenden, das repräsentativ für die Verformungen ist, die durch den Durchgang der rollenden Köper (3) einer Reihe induziert werden.

7. Wälzlager nach Anspruch 6, **dadurch gekennzeichnet, dass** die ausgerüsteten Bereiche (5) auf einer gleichen verformbaren Fläche (4) begrenzt sind, die sich axial erstreckt.

8. Wälzlager nach einem der Ansprüche 1 bis 7, **dadurch gekennzeichnet, dass** das feste Organ (1) mindestens einen Flansch (6) umfasst, der sich radial auf seinem äußeren Umfang erstreckt, wobei der Flansch axial mindestens einem ausgerüsteten Bereich (5) benachbart ist, um eine Versteifung des Bereichs sicherzustellen.

9. Wälzlager nach Anspruch 6 bis 8, **dadurch gekennzeichnet, dass** ein Flansch (6) zwischen den Reihen von rollenden Körpern (3) gebildet ist, wobei die Muster aus sensiblem Material jeder Art von ausgerüsteten Bereichen (5) axial in der Nähe von jeweils einer Seitenfläche des Flansches (6) angebracht sind.

10. Wälzlager nach Anspruch 6 bis 8, **dadurch gekennzeichnet, dass** die Arten von ausgerüsteten Bereichen (5) von jeweils einem Flansch (6a, 6b) versteift sind, wobei die Muster aus sensiblem Material jeder Art von ausgerüsteten Bereichen (5) axial in der Nähe einer Seitenfläche eines Flansches (6a, 6b) angebracht sind.
